# EUROPEAN PATENT SPECIFICATION

(11) **EP 3 578 044 B1**
(45) Date of publication and mention of the grant of the patent: **10.03.2021**
(21) Application number: 19178092.3
(22) Date of filing: 04.06.2019
(51) Int. Cl.: A01L 11/00, A01L 15/00

(54) **FLAT-TIPPED END FARRIER SHEARS**
HUFSCHMIEDSCHERE MIT FLACHSPITZIGEM ENDE
CISAILLES DE FORGERON À EXTRÉMITÉ DE BOUT PLAT

(30) Priority: 04.06.2018 US 201862680075 P
(43) Date of publication of application: 11.12.2019
(73) Proprietor: Garner, Joshua Israel, Grover Beach, CA 93433 (US)
(72) Inventor: Garner, Joshua Israel, Grover Beach, CA 93433 (US)
(74) Representative: Loo, Chi Ching

(56) References cited:
- WO-A1-2018/024925
- DE-A1- 3 324 021
- DE-U1-202010 007 705
- GB-A- 475 206
- US-A- 640 257

## Description

The current application claims a priority to the U.S. Provisional Patent application serial number 62/680,075 filed on June 04, 2018.

### FIELD OF THE INVENTION

The present invention relates generally farrier tools and the like. Specifically, the present invention is a flat-tipped end farrier shears as defined in claim 1.

### BACKGROUND OF THE INVENTION

In present society, there has been some advances in installing horseshoes on the hoof of horses, and the like. However, over the past years, the method behind installing horseshoes has not changed much. Although the method has not really differed much over the past years, there are several ways to improve the method. Firstly, the method is labor intensive and too time-consuming. The method requires that the farrier utilize a nail cutter and a hoof rasp. More specifically, after the nail is driven through the hoof (with a horseshoe attached) a farrier wants to immediately fold the nail over or twist the nail off for the farrier's safety. Aforementioned folded or twisted nail is required to be cut to a length through the nail cutters so that the farrier can then lock the nail on by clinching the nail. During the clinching process of the nail, existing nail cutters tend to pinch and deform the nail thus leaving a peak that needs to be shave down the hoof wall. Therefore, the farrier has to utilize the hoof rasp to remove the peak from the nail. This process is often repeated until the nail is flush with the hoof wall. Since this process is often repeated until the job is completed, the user can become fatigued sooner than expected. Also, the user can find themselves having spent a lot time on repeating this process. Finally, because of the repeated nature of the method, the longevity of the hoof rasp is reduced since it is being used for the nail, which is made of metal, when it is intended for the hoof wall, which is made of keratin. What is required is a farrier tool that can reduce the time spent in shearing and flushing the head of the nail, while reducing the need of other farrier tools unrelated to the shearing and flushing of the head of the nail. For example, GB475206 discloses conventional tool and method for cutting the hooves of cattle.

An objective of the present invention is to provide users with a horseshoe nail nipper, or the like, with flat-tipped ends to shear the heads of horseshoe nails in a flat and leveled fashion some distance off from the hoof wall of the animal. The present invention intends to eliminate the need to utilize both a nail nipper and a hoof rasp to produce in a flat and leveled surface that is parallel with the hoof wall and some distance off from the hoof wall in the head of the remaining nail. The present invention intends to provide users with a tool that eliminates the need to utilize a hoof rasp on the remaining nail portion. An objective of the present invention is to provide users with a farrier tool that reduces the amount of time spent or the number of steps taken in preparing the horseshoe attachment.

### SUMMARY OF THE INVENTION

The present invention is a flat-tipped end farrier shears comprising: a first arm; a second arm; a connector pin; the first arm and the second arm being rotatably connected to each other through the connector pin; the first arm having a first handle, a first shoulder, and a first jaw ; the second arm having a second handle, a second shoulder, and a second jaw; the first handle and the first jaw being oppositely connected to each other through the first shoulder; the second handle and the second jaw being oppositely connected to each other through the second shoulder; the first shoulder and the second shoulder being rotatably mounted to each other through the connector pin; a first shear-cutting edge of the first jaw being positioned offset from a second shear-cutting edge of the second jaw; an upper prong-receiving indentation; the upper prong-receiving indentation being integrated into a free end of the first jaw; the second shear-cutting edge being positioned atop the upper prong-receiving indentation; a height of the first shear-cutting edge being larger than a height of the second shear-cutting edge; and the height of the second shear-cutting edge being equal to a depth of the upper prong-receiving indentation.

### BRIEF DESCRIPTION OF THE DRAWINGS

FIG. **1** is a perspective view of the present invention.
FIG. **2** is a front view of the present invention.
FIG. **3** is a front view of the first arm of the present invention.
FIG. **4** is a front view of the second arm of the present invention.
FIG. **5** is an exploded perspective view of the present invention.
FIG. **6** is a detail view showing the height of the first shear-cutting edge being larger than the height of the second shear-cutting edge, and the free end of the second jaw being positioned within the upper prong-receiving indentation.

### DETAIL DESCRIPTIONS OF THE INVENTION

All illustrations of the drawings are to be describing selected versions of the present invention and are not intended to limit the scope of the present invention. All references of user or users pertain to individual or individuals who would utilize the present invention. All references of nail or nails can pertain to horseshoe nails, other animal hoofs, and other similar objects. All references of hoof or hoofs can pertain to horse hoofs, other animal hoofs, and other similar objects.

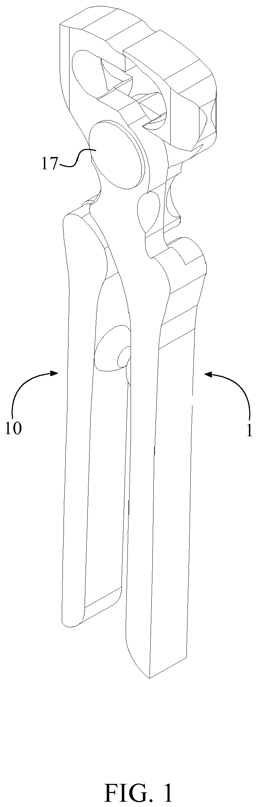

In reference to FIG. **1-2****,** the present invention relates to a flat-tipped end farrier shears, to shear the heads of nails in a flat and leveled fashion with a minimum distance off from the hoof wall. It is preferred that the present invention be of a material that is strong, durable, stiff, easily manufacturable, impact-resistant, lightweight, compatible and safe with hoof and/or nail, and/or penetrable. Such a material could include, but is not limited to, the following: steel, iron, titanium, and/or other similar metals. It can be preferred that the present invention be of a general shape and size similar to other farrier tools similar to the present invention.

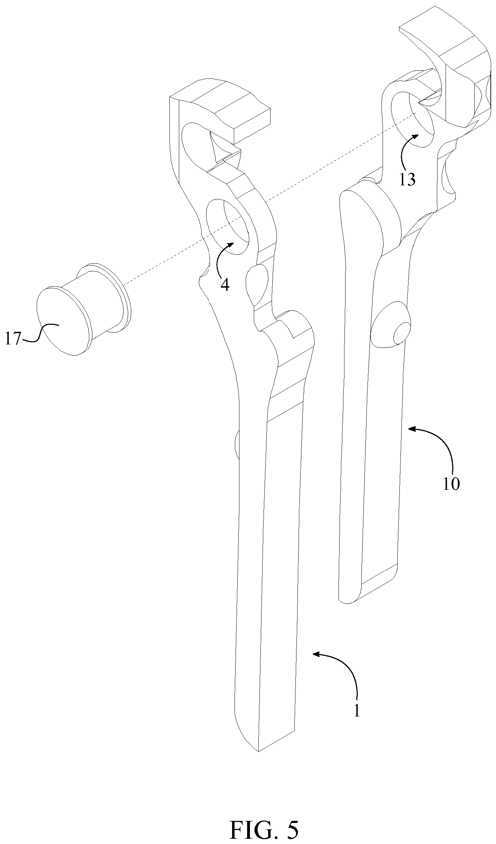

The present invention comprises a first arm **1,** a second arm **10,** a connector pin **17** as shown in FIG. **1-2** and FIG. **5****.** In reference to the general configuration, the first arm **1** and the second arm **10** are rotatably connected to each other through the connector pin **17** thus resembling the functionality and the appearance of a nail nipper. The first arm **1** that functions as a leverage support arm comprises a first handle **2,** a first shoulder **3,** and a first jaw **5.** Resultantly, the first handle **2** and the first jaw **5** are oppositely connected to each other through the first shoulder **3** so that the first arm **1** can function as an elongated body within the present invention. The second arm **10** also functions as a leverage support arm and comprises a second handle **11,** a second shoulder **12,** and a second jaw **14.** Resultantly, the second handle **11** and the second jaw **14** are oppositely connected to each other through the second shoulder **12** so that the second arm **10** can function as an elongated body within the present invention. It is also preferred that the first arm **1** be similar or identical to the second arm **10** in general shape. The first shoulder **3** and the second shoulder **12** are rotatably mounted to each other through the connector pin **17** thus enabling the functionality of the present invention. For example, when the first handle **2** and the second handle **11** are pushed towards each other, the first jaw **5** and the second jaw **14** are pressed against each other due to the engagement of the connector pin **17.** Then, present invention is able to successfully transfer applied power of the first handle **2** and the second handle **11** to a first shear-cutting edge **8** of the first jaw **5** and a second shear-cutting edge **15** of the second jaw **14.** As a result, the first shear-cutting edge **8** is positioned offset from the second shear-cutting edge **15** in such a way that the second shear-cutting edge **15** glides over the first shear-cutting edge **8.** In other words, pressing action of the first handle **2** and the second handle **11** towards each other converts the present invention into a closed or cinched position thus enabling shearing of the nail head.

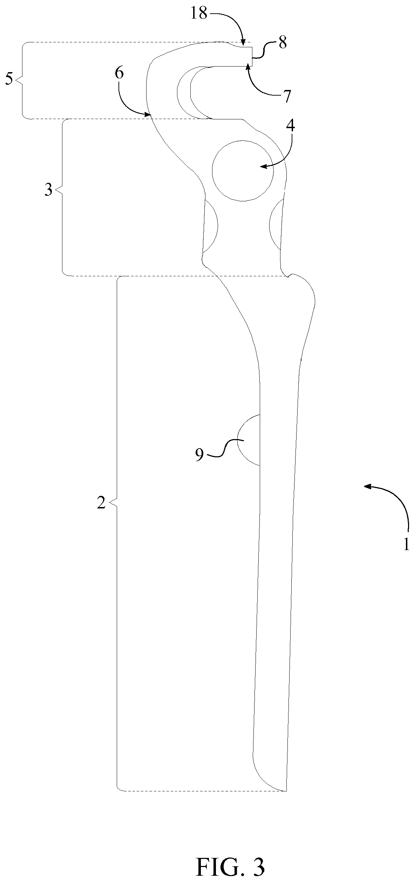

The first arm **1** is preferably shaped into an elongated, slender shape commonly found in some farrier tools like clinchers, nippers, and the like. In reference to FIG. **3****,** the first handle **2** that provides surface area to grasp and apply pressure is terminally connected to the first shoulder **3.** The first handle **2** may also configure into an ergonomic shape to improve user comfort during usage. The first shoulder **3** provides the necessary surface to engage with the second arm **10** so that the maximum and minimum rotational boundaries of the first arm **1** can be defined in response to positioning of the second arm **10.** The first jaw **5** is preferably shaped into a C-shaped body, wherein one end of the C-shaped body is connected to the first shoulder **3,** and the other end of the C-shaped body functions as the nail nipper. More specifically, a fixed end **6** of the first jaw **5** is terminally connected to the first shoulder **3,** opposite of the first handle **2.** A free end **7** of the first jaw **5** is oppositely positioned of the fixed end **6** of the first jaw **5,** along the first jaw **5.** The first shear-cutting edge **8** that presses against the nail head is terminally positioned on the first jaw **5** and positioned opposite of the first shoulder 3.

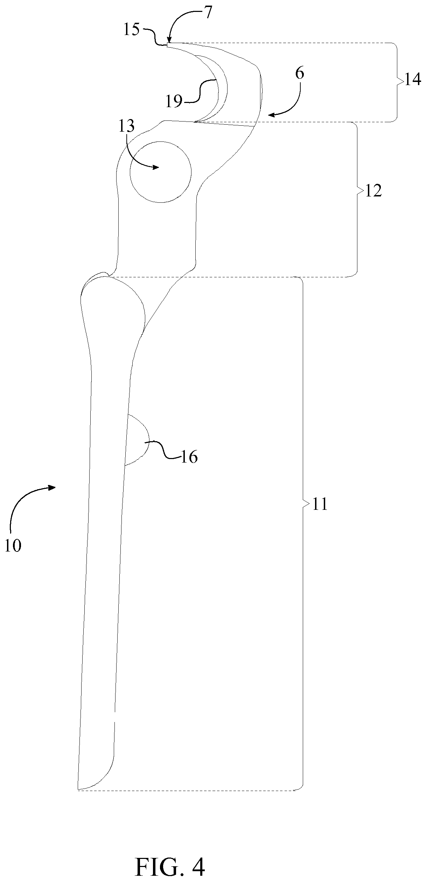

The second arm **10** is preferably shaped into an elongated, slender shape commonly found in some farrier tools like clinchers, nippers, and the like. In reference to FIG. **4****,** the second handle **11** that provides surface area to grasp and apply pressure is terminally connected to the second shoulder **12.** The second handle **11** may also configure into an ergonomic shape to improve user comfort during usage. The second shoulder **12** provides the necessary surface to engage with the first arm **1** so that the maximum and minimum rotational boundaries of the second arm **10** can be defined in response to positioning of the first arm **1.** The second jaw **14** is preferably shaped into a C-shaped body, wherein one end of the C-shaped body is connected to the second shoulder **12,** and the other end of the C-shaped body functions as the nail nipper. More specifically, a fixed end **6** of the second jaw **14** is terminally connected to the second shoulder **12,** opposite of the second handle **11.** A free end **7** of the second jaw **14** is oppositely positioned of the fixed end **6** of the second jaw **14,** along the end of the second jaw **14.** The second shear-cutting edge **15** that presses against the nail head is terminally positioned on the first jaw **5** and positioned opposite of the first shoulder **3.**

In reference to FIG. **3-5****,** the first arm **1** further comprises a first opening **4,** and the second arm **10** further comprises a second opening **13.** The first opening **4** and the second opening **13** are generally identical to each other so that the connector pin **17** can traverse through the first opening **4** and the second opening **13.** More specifically, the first opening **4** traverses through the first shoulder **3** and is positioned proximal to the first jaw **5.** The second opening **13** traverses through the second shoulder **12** and is positioned proximal to the second jaw **14.** The connector pin **17** is concentrically engaged with the first opening **4** and the second opening **13** thus enabling the rotational movement of the first arm **1** and the second arm **10** about the connector pin **17.**

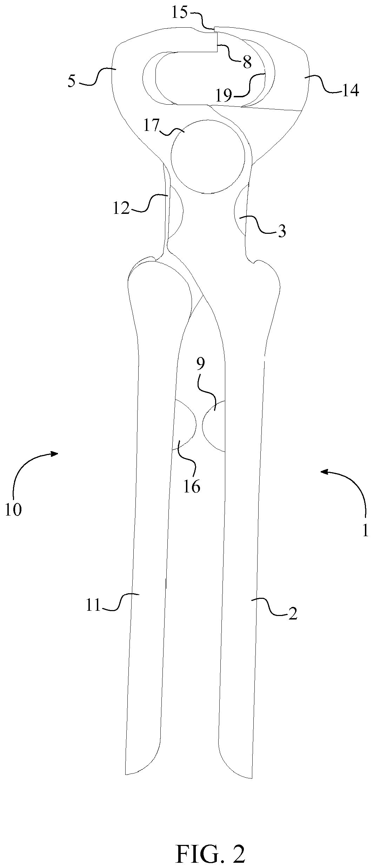

In reference to FIG. **2**, the shears further comprise a first stopper **9** and a second stopper **16.** The first stopper **9** and the second stopper **16** are preferably formed into a hemispherical-like shaped body and functions as a barrier so that the first handle **2** and the second handle **11** can be stopped parallel to each other. More specifically, the first stopper **9** is adjacently connected to the first handle **2** in such a way that the first stopper **9** orients toward the second handle **11.** The second stopper **16** is adjacently connected to the second handle **11** in such a way that the second stopper **16** orients toward the first handle **2.** As a result, when the first handle **2** and the second handle **11** are pressed together, the first stopper **9** and the second stopper **16** are pressed against each other thus maintaining a parallel positioning for the first handle **2** and the second handle **11.**

The present invention further comprises an upper prong-receiving indentation **18** that provides an empty area within the first jaw **5** as shown in FIG. **3****.** More specifically, the upper prong-receiving indentation **18** is integrated into the free end **7** of the first jaw **5** so that the free end **7** of the second jaw **14** can slide into the upper prong-receiving indentation **18.** In other words, the second shear-cutting edge **15** is positioned atop the upper prong-receiving indentation **18** and is slightly offset from the first shear-cutting edge **8.**

The shears may further comprise an inner concave surface **19** as shown in FIG. **2****.** More specifically, the inner concave surface **19** is internally extended from the free end **7** of the second jaw **14** to the fixed end **6** of the second jaw **14** so that the free end **7** of the first jaw **5** can slide adjacent to the inner concave surface **19.** In other words, the first shear-cutting edge **8** is positioned adjacent to the inner concave surface **19** about the free end 7 of the second jaw **14.**

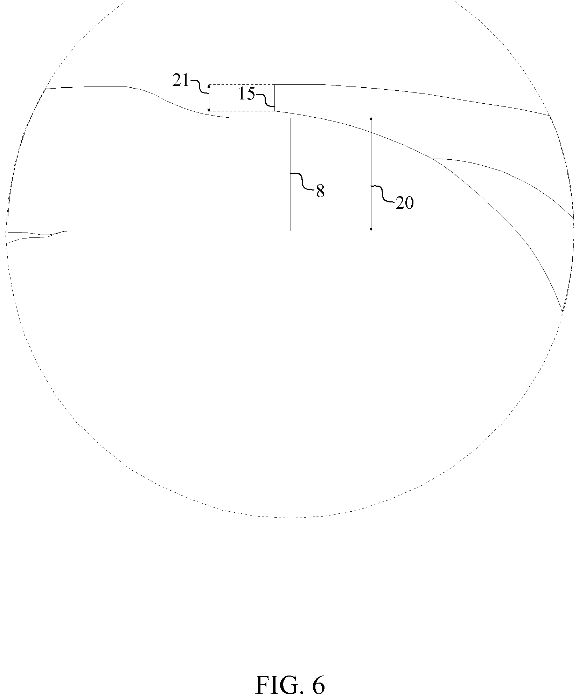

Generally, after the nail is driven through the hoof (with a horseshoe attached) a farrier wants to immediately fold the nail over or twist the nail off for the farrier's safety. Aforementioned folded or twisted nail is required to be cut to a length so that the farrier can then lock the nail on by clinching the nail. During the clinching process of the nail, existing nail cutters tend to pinch and deform the nail thus leaving a peak that needs to be rasped square. The present invention is able to shear the twisted or folded nail square thus leaving a minimum distance off from the hoof wall. Resultantly, the present invention is able to eliminate the rasping process as the remaining length of the nail does not leave a peak and does not form a safety issue. When the present invention is at the closed or cinched position, the engagement between the first shear-cutting edge **8** and the second shear-cutting edge **15** about the upper prong-receiving indentation **18** is able to shear the nail head in a flat and level fashion with a minimum distance off from the hoof wall. The remaining length of the nail is generally equal to a depth of the upper prong-receiving indentation **18** as the outer surface of the first jaw **5** and the second jaw **14** glide along the hoof wall during the shearing of the nail head. In order to cleanly and efficiently shear the nail head, a height **20** of the first shear-cutting edge **8** is required to be larger than a height **21** of the second shear-cutting edge **15** as shown in FIG. **6****.** As a result, the first shear-cutting edge **8** is able to provide a backing for the nail while the second shear-cutting edge **15** is able to shear the nail head. In order to attain the aforementioned minimum distance off from the hoof wall for the nail, the height of the second shear-cutting edge **15** is about equal to the depth of the upper prong-receiving indentation **18** so that the second shear-cutting edge **15** is able to push the remaining length of the nail into the upper prong-receiving indentation **18** after the nail head is being sheared.

Although the invention has been explained in relation to its preferred embodiment, it is to be understood that many other possible modifications and variations can be made without departing from the scope of the invention as hereinafter claimed.

## Claims

1. A flat-tipped end farrier shears comprising a first arm (1), a second arm (10) and a connector pin (17), the first arm (1) and the second arm (10) being rotatably connected to each other through the connector pin (17), wherein the flat-tipped end farrier shears further comprises:
the first arm (1) having a first handle (2), a first shoulder (3), and a first jaw (5);
the second arm (10) having a second handle (11), a second shoulder (12), and a second jaw (14);
the first handle (2) and the first jaw (5) being oppositely connected to each other through the first shoulder (3);
the second handle (11) and the second jaw (14) being oppositely connected to each other through the second shoulder (12);
the first shoulder (3) and the second shoulder (12) being rotatably mounted to each other through the connector pin (17);
a first shear-cutting edge (8) of the first jaw (5) being positioned offset from a second shear-cutting edge (15) of the second jaw (14) **characterized in that** the flat-tipped end farrier shears further comprises:
an upper prong-receiving indentation (18);
the upper prong-receiving indentation (18) being integrated into a free end (7) of the first jaw (5);
the second shear-cutting edge (15) being positioned atop the upper prong-receiving indentation (18);
a height of the first shear-cutting edge (8) being larger than a height of the second shear-cutting edge (15); and
the height of the second shear-cutting edge (15) being equal to a depth of the upper prong-receiving indentation (18).

2. The flat-tipped end farrier shears as claimed in claim 1 comprising:
the first handle (2) being terminally connected to the first shoulder (3);
a fixed end (6) of the first jaw (5) being terminally connected to the first shoulder (3), opposite of the first handle (2);
the free end (7) of the first jaw (5) being oppositely positioned of the fixed end (6) of the first jaw (5), along the first jaw (5); and
the first shear-cutting edge (8) being terminally positioned on the first jaw (5), opposite of the first shoulder (3).

3. The flat-tipped end farrier shears as claimed in claim 1 comprising:
the second handle (11) being terminally connected to the second shoulder (12);
a fixed end (6) of the second jaw (14) being terminally connected to the second shoulder (12), opposite of the second handle (11);
a free end (7) of the second jaw (14) being oppositely positioned of the fixed end (6) of the second jaw (14), along the second jaw (14); and
the second shear-cutting edge (15) being terminally positioned on the second jaw (14), opposite of the second shoulder (14).

4. The flat-tipped end farrier shears as claimed in claim 1 comprising:
the first arm (1) further comprises a first opening (4);
the second arm (10) further comprises a second opening (13);
the first opening (4) traversing through the first shoulder (3);
the second opening (13) traversing through the second shoulder (12); and
the connector pin (17) being concentrically engaged with the first opening (4) and the second opening (13).

5. The flat-tipped end farrier shears as claimed in claim 1 comprising:
a first stopper (9);
the first stopper (9) being adjacently connected to the first handle (2); and
the first stopper (9) being oriented toward the second handle (11).

6. The flat-tipped end farrier shears as claimed in claim 1 comprising:
a second stopper (16);
the second stopper (16) being adjacently connected to the second handle (11); and
the second stopper (16) being oriented toward the first handle (2).

7. The flat-tipped end farrier shears as claimed in claim 1 comprising:
an inner concave surface (19);
the inner concave surface (19) being internally extended from a free end (7) of the second jaw (14) to a fixed end (6) of the second jaw (14); and
the first shear-cutting edge (8) being positioned adjacent to the inner concave surface (19), about the free end (7) of the second jaw (14).

## Patentansprüche

1. Hufschmiedeschere mit flachem Ende, umfassend einen ersten Arm (1), einen zweiten Arm (10) und einen Verbindungsstift (17), wobei der erste Arm (1) und der zweite Arm (10) über den Verbindungsstift (17) drehbar miteinander verbunden sind, wobei die Hufschmiedeschere mit flachem Ende ferner Folgendes umfasst:
den ersten Arm (1), der einen ersten Griff (2), eine erste Schulter (3) und eine erste Backe (5) aufweist;
den zweiten Arm (10), der einen zweiten Griff (11), eine zweite Schulter (12) und eine zweite Backe (14) aufweist;
wobei der erste Griff (2) und die erste Backe (5) durch die erste Schulter (3) gegensätzlich miteinander verbunden sind;
wobei der zweite Griff (11) und die zweite Backe (14) durch die zweite Schulter (12) gegensätzlich miteinander verbunden sind;
wobei die erste Schulter (3) und die zweite Schulter (12) durch den Verbindungsstift (17) drehbar miteinander verbunden sind;
wobei eine erste Scherschneide (8) der ersten Backe (5) versetzt zu einer zweiten Scherschneide (15) der zweiten Backe (14) positioniert ist, **dadurch gekennzeichnet, dass** die Hufschmiedeschere mit flachem Ende ferner Folgendes umfasst:
eine obere Stiftaufnahmeeinkerbung (18);
wobei die Stiftaufnahmeeinkerbung (18) in ein freies Ende (7) der ersten Backe (5) integriert ist;
wobei die zweite Scherschneide (15) auf der oberen Stiftaufnahmeeinkerbung (18) positioniert ist;
wobei eine Höhe der ersten Scherschneide (8) größer als eine Höhe der zweiten Scherschneide (15) ist; und
wobei die Höhe der zweiten Scherschneide (15) einer Tiefe der oberen Stiftaufnahmeeinkerbung (18) entspricht.

2. Hufschmiedeschere mit flachem Ende nach Anspruch 1, umfassend:
den ersten Griff (2), der endständig mit der ersten Schulter (3) verbunden ist;
ein festes Ende (6) der ersten Backe (5), das gegenüber dem ersten Griff (2) endständig mit der ersten Schulter (3) verbunden ist;
wobei das freie Ende (7) der ersten Backe (5) gegenüber dem festen Ende (6) der ersten Backe (5) entlang der ersten Backe (5) entgegengesetzt positioniert ist; und
wobei sich die erste Scherschneide (8) endständig auf der ersten Backe (5) gegenüber der ersten Schulter (3) befindet.

3. Hufschmiedeschere mit flachem Ende nach Anspruch 1, umfassend:
den zweiten Griff (11), der endständig mit der zweiten Schulter (12) verbunden ist;
ein festes Ende (6) der zweiten Backe (14), das gegenüber dem zweiten Griff (11) endständig mit der zweiten Schulter (12) verbunden ist;
wobei ein freies Ende (7) der zweiten Backe (14) gegenüber dem festen Ende (6) der zweiten Backe (14) entlang der zweiten Backe (14) entgegengesetzt positioniert ist; und
wobei die zweite Scherschneide (15) endständig auf der zweiten Backe (14) gegenüber der zweiten Schulter (14) positioniert ist.

4. Hufschmiedeschere mit flachem Ende nach Anspruch 1, umfassend:
den ersten Arm (1), der ferner eine erste Öffnung (4) umfasst;
den zweiten Arm (10), der ferner eine zweite Öffnung (13) umfasst;
wobei die erste Öffnung (4) durch die erste Schulter (3) verläuft;
wobei die zweite Öffnung (13) durch die zweite Schulter (12) verläuft; und
wobei der Verbindungsstift (17) konzentrisch mit der ersten Öffnung (4) und der zweiten Öffnung (13) verbunden ist.

5. Hufschmiedeschere mit flachem Ende nach Anspruch 1, umfassend:
einen ersten Stopper (9);
wobei der erste Stopper (9) nebeneinander mit dem ersten Griff (2) verbunden ist; und
wobei der erste Stopper (9) zum zweiten Griff (11) ausgerichtet ist.

6. Hufschmiedeschere mit flachem Ende nach Anspruch 1, umfassend:
einen zweiten Stopper (16);
wobei der zweite Stopper (16) nebeneinander mit dem zweiten Griff (11) verbunden ist; und
wobei der zweite Stopper (16) zum ersten Griff (2) ausgerichtet ist.

7. Hufschmiedeschere mit flachem Ende nach Anspruch 1, umfassend:
eine innere konkave Oberfläche (19);
wobei die innere konkave Oberfläche (19) innen von einem freien Ende (7) der zweiten Backe (14) zu einem festen Ende (6) der zweiten Backe (14) verlängert ist; und
wobei sich die erste Scherschneide (8) neben der inneren konkaven Oberfläche (19) um das freie Ende (7) der zweiten Backe (14) befindet.

## Revendications

1. Cisailles de forgeron à extrémité de bout plat comprenant un premier bras (1), un second bras (10) et une broche de liaison (17), le premier bras (1) et le second bras (10) étant reliés de manière rotative l'un à l'autre à travers la broche de liaison (17), dans lesquelles les cisailles de forgeron à extrémité de bout plat comprennent en outre :
le premier bras (1) muni d'une première poignée (2), d'un premier épaulement (3) et d'une première mâchoire (5) ;
le second bras (10) muni d'une seconde poignée (11), d'un second épaulement (12) et d'une seconde mâchoire (14) ;
la première poignée (2) et la première mâchoire (5) étant reliées de manière opposée l'une à l'autre à travers le premier épaulement (3) ;
la seconde poignée (11) et la seconde mâchoire (14) étant reliées de manière opposée l'une à l'autre à travers le second épaulement (12) ;
le premier épaulement (3) et le second épaulement (12) étant montés de manière rotative l'un à l'autre à travers la broche de liaison (17) ;
un premier bord de coupe par cisaillement (8) de la première mâchoire (5) étant positionné de manière décalée par rapport à un second bord de coupe par cisaillement (15) de la seconde mâchoire (14) **caractérisées en ce que** les cisailles de forgeron à extrémité de bout plat comprennent en outre :
un renfoncement de réception de dent supérieur (18) ;
le renfoncement de réception de dent supérieur (18) étant intégré à une extrémité libre (7) de la première mâchoire (5) ;
le second bord de coupe par cisaillement (15) étant positionné en haut du renfoncement de réception de dent supérieur (18) ;
une hauteur du premier bord de coupe par cisaillement (8) étant plus grande qu'une hauteur du second bord de coupe par cisaillement (15) ; et
la hauteur du second bord de coupe par cisaillement (15) étant égale à une profondeur du renfoncement de réception de dent supérieur (18).

2. Cisailles de forgeron à extrémité de bout plat selon la revendication 1, comprenant :
la première poignée (2) étant reliée de manière terminale au premier épaulement (3) ;
une extrémité fixe (6) de la première mâchoire (5) étant reliée de manière terminale au premier épaulement (3), à l'opposé de la première poignée (2) ;
l'extrémité libre (7) de la première mâchoire (5) étant positionnée de manière opposée à l'extrémité fixe (6) de la première mâchoire (5), le long de la première mâchoire (5) ; et
le premier bord de coupe par cisaillement (8) étant positionné de manière terminale sur la première mâchoire (5), à l'opposé du premier épaulement (3).

3. Cisailles de forgeron à extrémité de bout plat selon la revendication 1, comprenant :
la seconde poignée (11) étant reliée de manière terminale au second épaulement (12) ;
une extrémité fixe (6) de la seconde mâchoire (14) étant reliée de manière terminale au second épaulement (12), à l'opposé de la seconde poignée (11) ;
une extrémité libre (7) de la seconde mâchoire (14) étant positionnée à l'opposé de l'extrémité fixe (6) de la seconde mâchoire (14), le long de la seconde mâchoire (14) ; et
le second bord de coupe par cisaillement (15) étant positionné de manière terminale sur la seconde mâchoire (14), à l'opposé du second épaulement (14).

4. Cisailles de forgeron à extrémité de bout plat selon la revendication 1, comprenant :
le premier bras (1) comprend en outre une première ouverture (4) ;
le second bras (10) comprend en outre une seconde ouverture (13) ;
la première ouverture (4) traversant le premier épaulement (3) ;
la seconde ouverture (13) traversant le second épaulement (12) ; et
la broche de liaison (17) étant en prise de manière concentrique avec la première ouverture (4) et la seconde ouverture (13).

5. Cisailles de forgeron à extrémité de bout plat selon la revendication 1, comprenant :
une première butée (9) ;
la première butée (9) étant reliée de manière adjacente à la première poignée (2) ; et
la première butée (9) étant orientée vers la seconde poignée (11).

6. Cisailles de forgeron à extrémité de bout plat selon la revendication 1, comprenant :
une seconde butée (16) ;
la seconde butée (16) étant reliée de manière adjacente à la seconde poignée (11) ; et
la seconde butée (16) étant orientée vers la première poignée (2).

7. Cisailles de forgeron à extrémité de bout plat selon la revendication 1, comprenant :
une surface concave interne (19) ;
la surface concave interne (19) s'étendant de manière interne d'une extrémité libre (7) de la seconde mâchoire (14) à une extrémité fixe (6) de la seconde mâchoire (14) ; et
le premier bord de coupe par cisaillement (8) étant positionné de manière adjacente à la surface concave interne (19), près de l'extrémité libre (7) de la seconde mâchoire (14).
